Europäisches Patentamt

European Patent Office

Office européen des brevets

(19)

(11) Veröffentlichungsnummer: **0 209 063**
**B1**

(12) **EUROPÄISCHE PATENTSCHRIFT**

(45) Veröffentlichungstag der Patentschrift: **14.11.90**

(51) Int. Cl.⁵: **A 01 C 7/12**

(21) Anmeldenummer: **86109317.7**

(22) Anmeldetag: **08.07.86**

(54) **Sävorrichtung.**

(30) Priorität: **13.07.85 DE 3525091**

(43) Veröffentlichungstag der Anmeldung:
**21.01.87 Patentblatt 87/04**

(45) Bekanntmachung des Hinweises auf die
Patenterteilung:
**14.11.90 Patentblatt 90/46**

(84) Benannte Vertragsstaaten:
**AT BE CH DE FR GB IT LI NL SE**

(56) Entgegenhaltungen:
**DE-A-1 949 926**
**DE-C- 837 022**

(73) Patentinhaber: **A.J. Tröster GmbH + Co KG**
**Kaiserstrasse 9-11**
**D-6308 Butzbach (DE)**

(72) Erfinder: **Link, Alfred**
**Alte Brauerei 1**
**D-6308 Butzbach (DE)**
Erfinder: **Schmidt, Georg, Dipl.-Ing.**
**Ziegelgasse 14**
**D-6309 Rockenberg (DE)**
Erfinder: **Sorg, Friedrich**
**Am Alten Schloss 31**
**D-6000 Frankfurt 50 (DE)**

(74) Vertreter: **Schlagwein, Udo, Dipl.-Ing.**
**Anwaltsbüro Ruppert & Schlagwein Frankfurter**
**Strasse 34**
**D-6350 Bad Nauheim (DE)**

EP 0 209 063 B1

Courier Press, Leamington Spa, England.

**Beschreibung**

Die Erfindung bezieht sich auf eine Sävorrichtung, bei der in einem Sägehäuse drehfest auf einer Säwelle ein Nocken aufweisendes Feinsärad und daneben verdrehbar auf der Säwelle ein ebenfalls Nocken aufweisendes Normalsärad angeordnet sind und bei der, zum kuppeln mit dem Feinsärad, das Normalsärad ein axial verschiebbares, formschlüssig in eine Ausnehmung des Feinsärades einschiebbares Paßstück hat. Eine solche Sävorrichtung ist in der DE—PS 837 022 beschrieben.

Bei der bekannten Sävorrichtung ist als Paßstück (Kuppelstück) ein in einer axialen Bohrung des Normalsärades verschieblich angeordneter Stift vorgesehen, der je nach seiner durch zwei Rastvertiefungen vorgegebenen Stellung entweder mit einem Ende in einen Durchbruch des Sägehäuses oder aber mit seinem anderen Ende in einem Durchbruch des Feinsärades ragt. Dadurch ist das Normalsärad entweder mit dem Sägehäuse verbunden und dadurch vor Verdrehung gesichert oder aber mit dem Feinsärad gekuppelt, so daß es mit dem Feinsärad synchron umläuft.

Durch diese Möglichkeit des Entkuppelns des Normalsärades kann man für Feinsämereien die Austragsmenge bei konstanter Drehzahl der Säwelle erheblich herabsetzen. Das Übersetzungsgetriebe für den Antrieb der Säwelle kommt dann mit weniger Geschwindigkeitsabstufungen aus, so daß es sich vereinfacht. Nachteilig bei der bekannten Sävorrichtung ist die Art der Betätigung des Kuppelstückes. Da Drillmaschinen entsprechend ihrer Arbeitsbreite eine größere Anzahl von Sävorrichtungen nebeneinander aufweisen, sind die nur von der Seite her zugänglichen Stifte schwierig zu betätigen. Hinzu kommt, daß die Stifte oftmals infolge von Verschmutzungen schwergängig sind, was ihre Betätigung zusätzlich erschwert.

Der Erfindung liegt die Aufgabe zugrunde, eine Sävorrichtung der eingangs genannten Art derart zu gestalten, daß das Kuppeln des Normalsärades möglichst einfach durchführbar ist.

Diese Aufgabe wird erfindungsgemäß dadurch gelöst, daß das Paßstück als Nocken des Normalsärades ausgebildet ist, und an diesem axial verschieblich angeordnet ist.

Durch diese Gestaltung kann das Ein- und Auskuppeln des Normalsärades durch Verschieben eines Nockens von der rückwärtigen Stirnseite der Drillmachine her erfolgen. Man braucht deshalb nicht mehr in den schlecht zugänglichen und kaum einsehbaren Bereich seitlich neben den einzelnen Sävorrichtungen zu gelangen, um das Ein- und Auskuppeln zu bewerkstelligen. Dadurch ist ein Umstellen der Sävorrichtungen einfacher und rascher möglich als bei den bekannten Sävorrichtungen. Weiterhin kann man mit einem Blick von der Rückseite der Drillmaschine her erkennen, in welcher Stellung sich die Kuppelstücke befinden.

Konstruktiv besonders einfach gestaltet sich die Sävorrichtung, wenn das Kuppelstück ein in einen axialen Schlitz in der Mantelfläche des Särades eingesetztes Paßstück ist.

Ein unerwünschtes Mitlaufen des Normalsärades mit dem Feinsärad aufgrund von Reibkräften kann bei der erfindungsgemäßen Sävorrichtung auf gleich einfache Weise vermieden werden wie bei der bisher bekannten Sävorrichtung, wenn gemäß einer vorteilhaften Ausgestaltung der Efindung das Paßstück in einer ersten Stellung an einer Seite axial aus dem Normalsärad ragt und in eine Ausnehmung des Sägehäuses greift und in seiner zweiten Stellung axial aus der anderen Seite des Normalsärades in die Ausnehung des Feinsärades greift.

Die beiden Schaltstellungen des Paßstückes können auf einfache Weise durch Rasten festgelegt sein, wenn an der Unterseite des Paßstückes Rastvertiefungen vorgesehen sind, in die eine Kugel einzurasten vermag, welche in einer radialen Bohrung des Normalsärades sitzt und radial zu den Rastvertiefungen hin vorgespannt ist.

Eine andere, vorteilhafte Ausgestaltung der Erfindung besteht darin, daß der beim Verschieben des Paßstückes zwischen den Rastvertiefungen zu überwindende Steg eine geringere Höhe hat als die axial neben den Rastvertiefungen liegenden Paßstückbereiche. Durch diese Gestaltung kann das Umstellen der Paßstücke mit relativ geringer Kraft erfolgen. Zum Ausbau der Paßstücke ist jedoch ein höherer Steg zu überwinden, so daß die Paßstücke zuverlässig im Normalsärad gehalten sind.

Ein Verschmutzen der Rasten kann vermieden werden, wenn die Rasten in beiden Schaltstellungen des Paßstückes innerhalb der Kontur des Normalsärades vorgesehen sind.

Die Austragsmenge der Sävorrichtung kann bei konstanter Drehzahl in drei Stufen verändert werden, wenn gemäß einer anderen, vorteilhaften Ausgestaltung der Erfindung zu beiden Seiten eines Feinsärades jeweils ein Normalsärad mit einem verschiebbaren Nocken und einem Paßstück vorgesehen ist.

Vorteilhaft ist es auch, wenn das Feinsärad zum Normalsärad hin einen manschettenartigen Ansatz mit einer umlaufenden, radialen Rasterhöhung und das Normalsärad einen entsprechenden, über den Ansatz des Feinsärades greifenden, maschettenartigen Ansatz mit einer über die Rasterhöhung greifenden Rastvertiefung hat. Durch diese Gestaltung wird die gesamte Säradanordnung schon vor ihrem Einbau in das Sägehäuse als Einheit zusammengehalten, was ihre Montage erleichtert.

Besonders einfach und gut geführt ist das Paßstück, wenn es zwischen dem manschettenartigen Ansatz des Normalsärades und einer Mantelfläche mit einem Führungsstück sitzt und mit einer den Nocken aufweisenden Führungsleiste durch den Schlitz in der Mantelfläche greift.

Vorteilhaft ist es auch, wenn die Ausnehmungen im Feinsärad in einen Winkel von höchstens 90 Grad zueinander angeordnet sind. Durch diese Gestaltung ist gewährleistet, daß sich sowohl das rechte als auch das linke Normalsärad zu- bw. abschalten läßt, wenn eine Markierung auf dem Feinsärad, die zwischen den beiden Ausnehmungen angebracht ist, in der von hinten zugänglichen Stellung senkrecht nach oben steht.

Die Erfindung läßt zahlreiche Ausführungsformen zu. Eine davon ist in der Zeichnung dargestellt und wird nachfolgend beschrieben. In der Zeichnung zeigen die

Fig. 1 eine Seitenansicht der efindungsgemäßen Sävorrichtung,

Fig. 2 einen Schnitt durch die Sävorrichtung entlang der Linie II—II,

Fig. 3 eine Seitenansicht eines Paßstückes der Sävorrichtung,

Fig. 4 eine Vorderansicht des Paßstückes nach der Figur 2.

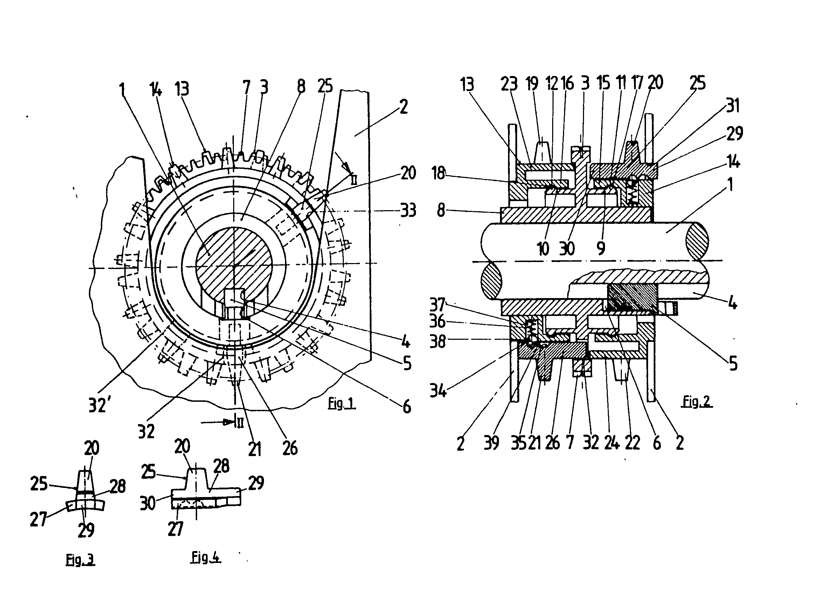

In den Figuren 1 und 2 ist eine Säwelle 1 dargestellt, die ein Sägehäuse 2 durchdringt. Im Inneren des Sägehäuses 2 ist auf der Säwelle 1 drehfest ein Feinsärad 3 angeordnet. Erreicht wird diese drehfeste Verbindung auf übliche Weise mittels einer Feder 5, die in einer Nut 4 der Säwelle 1 sitzt und in eine entsprechende Nut 6 des Feinsärades 3 greift.

Im folgenden wird die Sävorrichtung überwiegend anhand der Figur 2 beschrieben und nur gelegentlich noch auf die Figur 1 verwiesen. Das Feinsärad 3 hat auf seinem Außenumfang Nocken 7, welche ein dosiertes Austragen des Saatgutes aus einem nicht gezeigten Saatgutbehälter ermöglichen. Es sitzt mit einer die Nut 6 aufweisenden Nabe 8 auf der Säwelle 1. Weiterhin hat das Feinsärad 3 nach beiden Seiten hin jeweils einen manschettenförmigen Ansatz 9, 10, der außenseitig jeweils einen wulstförmigen, umlaufenden Rastvorsprung 11, 12 hat.

Zu beiden Seiten des Feinsärades 3 ist koaxial zur Welle 1 ein Normalsärad 13, 14 vorgesehen. Dieses hat jeweils einen manschettenartigen Ansatz 15, 16 mit jeweils einer umlaufenden Rastvertiefung 17, 18. Mit diesen Ansätzen 15, 16 greifen die Normalsäräder 13, 14 über die manschettenförmigen Ansätze 9, 10 des Feinsärades 3 und sind mit den Rastvertiefungen 17, 18 auf den Rastvorsprüngen 11, 12 verrastet. Die Normalsäräder 13, 14 weisen, genau wie das Feinsärad 3, Nocken auf, zum Beispiel Nocken 19, 20, 21, 22. Diese Nocken 19, 20, 21, 22 ragen aus einer Mantelfläche 23 bzw. 24 des jeweiligen Normalsärades 13, 14. Bei jedem Normalsärad 13, 14 ist ein Nocken 20, 21 nicht fest mit der Mantelfläche 23, 24 verbunden, sondern Teil eines Paßstückes 25, 26.

Die genaue Gestaltung der Paßstücke 25 und 26 ist den Figuren 3 und 4 zu entnehmen. Das Paßstück 25 und entsprechend natürlich auch das gleich ausgebildete Paßstück 26 hat ein Führungsstück 27, welches bogenförmig gekrümmt ist und genau zwischen die Mantelfläche 24 und den Ansatz 15 des Normalsärades 14 paßt. Auf dem Führungsstück ist eine Führungsleiste 28 vorgesehen, die den Nocken 20 trägt und durch eine in Figur 1 dargestellten Schlitz 33 in der Mantelfläche 24 zu greifen vermag. An beiden Stirnseiten hat das Führungsstück 27 einen im Querschnitt in etwa rechteckigen Vorsprung 29, 30, der für die Funktion der Anordnung besonders bedeutsam ist.

Wie die Figur 2 erkennen läßt, ragt in der dargestellten Position des Paßstückes 25 dieses mit seinem Vorsprung 29 in eine Ausnehmung 31 des Sägehäuses 2. Das Normalsärad 14 ist dadurch fest mit dem Sägehäuse 2 verbunden, so daß es sich nicht drehen kann. Schiebt man das Paßstück 25 in der Zeichnung gesehen nach links, so vermag es bei richtiger Stellung des Feinsärades 3 mit seinem Vorsprung 30 in eine Ausnehmung des Feinsärades 3 zu greifen. Eine solche Stellung, in der das Normalsärad 14 mit dem Feinsärad 3 gekuppelt ist, ist für das Paßstück 26 gezeigt. Zu erkennen ist im linken, unteren Bildteil der Figur 2, daß das Paßstück 26 in eine Ausnehmung 32 des Feinsärades 3 greift und nicht mehr in eine Ausnehmung des Sägehäuses 2. Dadurch dreht sich das Normlsärad 13 synchron mit dem Feinsärad 3.

In der Figur 1 sind gestrichelt zwei Ausnehmungen 32, 32' dargestellt, die in einem Winkel von etwa 45 Grad zueinander stehen. Um die richtige Stellung für den Kuppelvorgang zu finden, können die verschieblichen Nocken 20, 21 farbig gekennzeichnet sein. Desweiteren empfiehlt es sich, zwischen den beiden Ausnehmungen 32, 32' eine Markierung auf dem Feinsärad 3 vorzusehen, um seine Ausnehmungen 32, 32' in die richtige Stellung zu den Paßstücken 25, 26 bringen zu können. Wenn die Ausnehmungen 32, 32' nicht mehr als 90 Grad zueinander angeordnet sind, kann man ohne Verdrehen der Säwelle 1 von hinten gleichzeitig beide Nocken 20, 21 verschieben und damit beide Normalsäräder 13, 14 kuppeln.

Um die Paßstücke 25, 26 in ihren beiden Stellungen zu fixieren, weisen sie in der Unterseite des Führungsstückes 27 jeweils axial hintereinander zwei Rastvertiefungen 34, 35 (Figur 2) auf. Eine Druckfeder 36 ist in einer radialen Bohrung 37 des Normalsärades 13 bzw. 14 angeordnet und drückt eine Kugel 38 radial nach außen, so daß sie je nach Stellung des Paßstückes 25 bzw. 26 in der einen oder anderen Rastvertiefung 34, 35 sitzt. Zwischen den Rastvertiefungen 34, 35 ist ein Steg 39 vorgesehen, der eine relativ geringe Höhe aufweist, so daß die Paßstücke 25, 26 relativ leicht von einer Raststellung in die andere verschoben werden kann.

Auflistung der verwendeten Bezugszeichen

1 Säwelle
2 Sägehäuse
3 Feinsärad
4 Nut
5 Feder
6 Nut
7 Nocken
8 Nabe
9 manschettenförmiger Ansatz
10 manschettenförmiger Ansatz
11 Rasterhöhung

12 Rasterhöhung
13 Normalsärad
14 Normalsärad
15 Ansatz
16 Ansatz
17 Rastvertiefung
18 Rastvertiefung
19 Nocken
20 Nocken
21 Nocken
22 Nocken
23 Mantelfläche
24 Mantelfläche
25 Paßstück
26 Paßstück
27 Führungsstück
28 Führungsleiste
29 Vorsprung
30 Vorsprung
31 Ausnehmung
32 Ausnehmung
33 Schlitz
34 Rastvertiefung
35 Rastvertiefung
36 Druckfeder
37 Bohrung
38 Kugel
39 Steg

## Patentansprüche

1. Sävorrichtung, bei der in einem Sägehäuse (2) drehfest auf einer Säwelle (1) ein Nocken (7) aufweisendes Feinsärad (3) und daneben verdrehbar auf der Säwelle (1) ein ebenfalls Nocken (19, 20, 21, 22) aufweisendes Normalsärad 13, 14 angeordnet sind und bei der, zum Kuppeln mit dem Feinsärad, das Normalsärad (13, 14) ein axial verschiebbares, formschlüssig in eine Ausnehmung des Feinsärades einschiebbares Paßstück (25, 26) hat, dadurch gekennzeichnet, daß das Paßstück (25, 26) als Nocken (20, 21) des Normalsärades (13, 14) ausgebildet ist, und an diesen axial verschieblich angeordnet ist.

2. Sävorrichtung nach Anspruch 1, dadurch gekennzeichnet, daß das Paßstück (25, 26) durch einen axialen Schlitz (33) in der Mantelfläche (23, 24) des Normalsärades (13, 14) greift.

3. Sävorrichtung nach den Ansprüchen 1 oder 2, dadurch gekennzeichnet, daß das Paßstück (25, 26) so ausgebildet ist, daß es in einer ersten Stellung an einer Seite axial aus dem Normalsärad (13, 14) ragt und in eine Ausnehmung (31) des Sägehäuses (2) greift und in seiner zweiten Stellung axial aus der anderen Seite des Normalsärades (13, 14) in die Ausnehmung (32, 32') des Feinsärades (3) greift.

4. Sävorrichtung nach einem oder mehreren der vorangehenden Ansprüche, dadurch gekennzeichnet, daß die beiden Stellungen des Paßstückes (25, 26) durch Rastvertiefungen (34, 35) an der Unterseite des Paßstückes (25, 26) festgelegt sind, in die eine Kugel (38) einzurasten vermag, welche in einer radialen Bohrung (37) des Normalsärades (13, 14) sitzt und radial zu den Rastvertiefungen (34, 35) hin vorgespannt ist.

5. Sävorrichtung nach einem oder mehreren der vorangehenden Ansprüche, dadurch gekennzeichnet, daß der beim Verschieben des Paßstückes (25, 26) zwischen den Rastvertiefungen (34, 35) zu überwindende Steg (39) eine geringere Höhe hat als die axial neben den Rastvertiefungen (34, 35) liegenden Paßstückbereiche.

6. Sävorrichtung nach einem oder mehreren der vorangehenden Ansprüche, dadurch gekennzeichnet, daß die Rastvertiefungen (34, 35) in beiden Schaltstellungen des Paßstückes (25, 26) innerhalb der Kontur des Normalsärades (13, 14) vorgesehen sind.

7. Sävorrichtung nach einem oder mehreren der vorangehenden Ansprüche, dadurch gekennzeichnet, daß zu beiden Seiten eines Feinsärades (3) jeweils ein Normalsärad (13, 14) mit einem verschiebbaren Nocken (20, 21) und einem Paßstück (25, 26) vorgesehen ist.

8. Sävorrichtung nach einem oder mehreren der vorangehenden Ansprüche, dadurch gekennzeichnet, daß das Feinsärad (3) zum Normalsärad (13, 14) hin einen manschettenartigen Ansatz (9, 10) mit einer umlaufenden, radialen Rasterhöhung (11, 12) und das Normalsärad (13, 14) einen entsprechenden, über den Ansatz (9, 10) des Feinsärades (3) greifenden manschettenartigen Ansatz (15, 16) mit einer über die Rasterhöhung (11, 12) greifenden Rastvertiefung (17, 18) hat.

9. Sävorrichtung nach einem oder mehreren der vorangehenden Ansprüche, dadurch gekennzeichnet, daß das Paßstück (25, 26) zwischen dem manschettenartigen Ansatz (15, 16) und einer Mantelfläche (23, 24) des Normalsärades (3) mit einem Führungsstück (27) sitzt und mit einer den Nocken (20) aufweisenden Führungsleiste (28) durch die Nut (33) in der Mantelfläche (23, 24) greift.

10. Sävorrichtung nach einem oder mehreren der vorangehenden Ansprüche, dadurch gekennzeichnet, daß die Ausnehmungen (32, 32') im Feinsärad (3) in einen Winkel von höchstens 90 Grad zueinander angeordnet sind.

## Revendications

1. Semoir dans lequel une roue à semer fine (3) comportant des cames (7) est montée solidaire en rotation sur un arbre de semoir (1) et à côté est montée de manière à pouvoir tourner sur l'arbre de semoir (1) une roue à semer normale (13, 14) comportant également des cames (19, 20, 21, 22) et dans lequel, pour l'accouplement avec la roue à semer fine, la roue à semer normale (13, 14) a une pièce adaptée (25, 26) coulissable axialement, insérable dans un évidement de la roue à semer fine avec obtention d'une liaison par la forme caractérisé en ce que la pièce adpatée (25, 26) est agencée en came (20, 21) de la roue à semer normale (13, 14) et est disposée de manière axialement coulissable sur celle-ci.

2. Semoir selon la revendication 1 caractérisé en ce que la pièce adaptée (25, 26) s'engage à travers une fente axiale (33) dans la surface latérale (23, 24) et de la roue à semer normale (13, 14).

3. Semoir selon les revendications 1 ou 2 caractérisé en ce que la pièce adaptée (25, 26) est agencée de manière telle qu'elle fait saillie, dans une première position, à un côté axialement hors de la roue à semer normale (13, 14) et qu'elle s'engage dans un évidement (31) du carter de semoir (2) et, dans sa deuxième position, elle fait saillie axialement hors de l'autre côté de la roue à semer normale (13, 14) et s'engage dans l'évidement (32, 32') de la roue à semer fine (3).

4. Semoir selon une ou plusieurs des revendications précédentes caractérisé en ce que les deux positions de la pièce adaptée (25, 26) sont fixées par des creux d'encliquetage (34, 35) à la face inférieure de la pièce adaptée (25, 26), creux dans lesquels peut s'encliqueter une bille (38) qui est placée dans un alésage axial (37) de la roue à semer normale et qui est soumise à une précontrainte radialement vers les creux d'encliquetage (34, 35).

5. Semoir selon une ou plusieurs des revendications précédentes caractérisé en ce que la partie en pont (39) entre les creux d'encliquetage (34, 35) devant être surmontée lors du coulissement de la pièce adaptée (25, 26) présente une hauteur inférieure à celle des zones de la pièce adaptée disposées axialement à côté des creux d'encliquetage (34, 35).

6. Semoir selon une ou plusieurs des revendications précédentes caractérisé en ce que les creux d'encliquetage (34, 35) sont prévus dans les deux positions d'insertion de la pièce adaptée (25, 26) à l'intérieur du contour de la roue à semer normale (13, 14).

7. Semoir selon une ou plusieurs des revendications précédentes caractérisé en ce que l'on prévoit aux deux côtés d'une roue à semer fine (3) chaque fois une roue à semer normale (13, 14) avec une came coulissable (20, 21) et une pièce adaptée (25, 26).

8. Semoir selon une ou plusieurs des revendications précédentes caractérisé en ce que la roue à semer fine présente (3) présente vers la roue à semer normale (13, 14) une saillie du genre manchette (9, 10) avec une élévation d'encliquetage radiale, circulaire (11, 12) et la roue à semer normale (13, 14) présente une saillie en manchette (15, 16) correspondante s'engageant sur la saillie (9, 10) de la roue à semer fine avec un creux d'encliquetage (17, 18) s'engageant sur l'élévation d'encliquetage (11, 12).

9. Semoir selon une ou plusieurs des revendications précédentes caractérisé en ce que la pièce adaptée (25, 26) est placée avec une pièce de guidage entre la saillie du genre manchette (15, 16) et une surface latérale (23, 24) de la roue à semer normale (3) et elle s'engage avec une barre de guidage (28) comportant la came (20) à travers la rainure (33) dans la surface latérale (23, 24).

10. Semoir selon une ou plusieurs des revendications précédentes caractérisé en ce que les évidements (32, 32') sont disposés l'un par rapport à l'autre dans la roue à semer fine en formant un angle de 90 degrés au maximum.

**Claims**

1. Seeder in which a fine seeding wheel (3) having cogs (7) is arranged non-rotatably on a seeding shaft (1) in a seeding housing (2) and a normal seeding wheel (13, 14) also having cogs (19, 20, 21, 22) is arranged adjacent thereto, rotatably on the seeding shaft (1) and in which the normal seeding wheel (13, 14) has an axially displaceable locating member (25, 26) which can be inserted positively into a recess in the fine seeding wheel to form a coupling with the fine seeding wheel, characterised in that the locating member (25, 26) is constructed as a cog (20, 21) of the normal seeding wheel (13, 14) and is arranged axially displaceably thereon.

2. Seeder according to claim 1, characterised in that the locating member (25, 26) engages through an axial slot (33) in the generated surface (23, 24) of the normal seeding wheel (13, 14).

3. Seeder according to claims 1 or 2, characterised in that the locating member (25, 26) is constructed such that it projects axially from the normal seeding wheel (13, 14) on one side and engages in a recess (31) of the seeding housing (2) in a first position and engages axially from the other side of the normal seeding wheel (13, 14) into the recess (32, 32') of the fine seeding wheel (3) in its second position.

4. Seeder according to one or more of the preceding claims, characterised in that the two positions of the locating member (25, 26) are fixed by indentations (34, 35) on the underside of the locating member (25, 26) in which there can be caught a ball (38) which rests in a radial bore (37) of the normal seeding wheel (13, 14) and is prestressed radially toward the indentations (34, 35).

5. Seeder according to one or more of the preceding claims, characterised in that the bridge (39) to be surmounted between the indentations (34, 35), during the displacement of the locating member (25, 26), has a smaller height than the regions of the locating member situated axially adjacent to the indentations (34, 35).

6. Seeder according to one or more of the preceding claims, characterised in that the indentations (34, 35) in the two control positions of the locating member (25, 26) are provided inside the contour of the normal seeding wheel (13, 14).

7. Seeder according to one or more of the preceding claims, characterised in that a respective normal seeding wheel (13, 14) with a displaceable cog (20, 21) and a locating member (25, 26) is provided on both sides of a fine seeding wheel (3).

8. Seeder according to one or more of the preceding claims, characterised in that the fine seeding wheel (3) has, toward the normal seeding wheel (13, 14), a sleeve-like attachment (9, 10) with an encircling radial hump (11, 12) and the normal seeding wheel (13, 14) has a corresponding sleeve-like attachment (15, 16) which engages over the attachment (9, 10) of the fine seeding wheel (3) and comprises an indentation (17, 18) engaging with the hump (11, 12).

9. Seeder according to one or more of the preceding claims, characterised in that the locating member (25, 26) rests between the sleeve-like attachment (15, 16) and a generated surface (23, 24) of the normal seeding wheel (3) with a guide member (27) and engages, with a guide strip (28) having the cog (20), through the groove (33) in the generated surface (23, 24).

10. Seeder according to one or more of the preceding claims, characterised in that the recesses (32, 32') in the fine seeding wheel (3) are arranged at an angle of at most 90° to one another.

Fig. 1

Fig. 3

Fig. 4

Fig. 2

EP 0 209 063 B1